# EUROPEAN PATENT APPLICATION

(11) **EP 1 655 108 A1**
(43) Date of publication of application: **10.05.2006**
(21) Application number: 05256277.4
(22) Date of filing: 07.10.2005
(51) Int. Cl.: B25B 27/00, B21J 15/44

(54) **Self-aligning tool for installation of pull type fastener**

(30) Priority: 04.11.2004 US 625152
(71) Applicant: TEXTRON, INC., Providence, Rhode Islands 02903 (US)
(72) Inventor: Toosky, Rahmatollah Fakhri, San Clemente CA 92673 (US); Estrada, Katie Lynn, Covin CA 91724 (US); Kurlinkus, Rob, Santa Ana CA 92704 (US)
(74) Representative: Mackenzie, Andrew Bryan

(57) **Abstract**

A pull head (100, 100a) for installing pull type fasteners, such as rivetless nut plates. The pull head (100, 100a) includes a sleeve (102), a nosepiece (104) on the sleeve (102), and an insert (140, 140a) which extends from the nosepiece (104). The insert (140, 140a) enters an aperture (52) in a workpiece (54) and centers the pull head (100, 100a) relative to the aperture (52). The insert (140, 140a) is shiftable relative to the nosepiece (104), and preferably includes a taper (146, 146a) at its end (144) to facilitate entry into the aperture (52). The pull head (100, 100a) includes jaws (120) which grab and pull on a stem (58) or fastener, and the insert (140, 140a) provides that as the stem (58) or fastener is pulled, a surface of the stem (58) or fastener contacts the insert (140, 140a) and the insert (140, 140a) is pulled along with the stem (58) or fastener. As such, the insert (140, 140a) begins in the aperture (52), but is pulled out of the aperture (52) as the stem (58) or fastener is pulled to effect installation.

## Description

### Background

This invention generally relates to tools for installing pull type fasteners, and more specifically relates to such a tool where the tool includes a self-aligning feature.

Tools for installing pull type fasteners are standard in the industry. Such tools include riveters and other tools which impart a holding or abutment force to a workpiece while imparting a pulling force on a fastener, thereby installing the fastener with regard to the workpiece. Typically, such tools are handheld and are either manual or hydraulically powered. A typical tool used for such an application includes a cylinder which generates a pulling force on a piston. The piston is engageable with a pull head which transfers the pulling force to the fastener. Examples of such tools currently available in the industry include Textron Aerospace Fasteners' G750A hand riveter and G704B power tool, both of which are configured to work with a plurality of pull heads depending on the specific application.

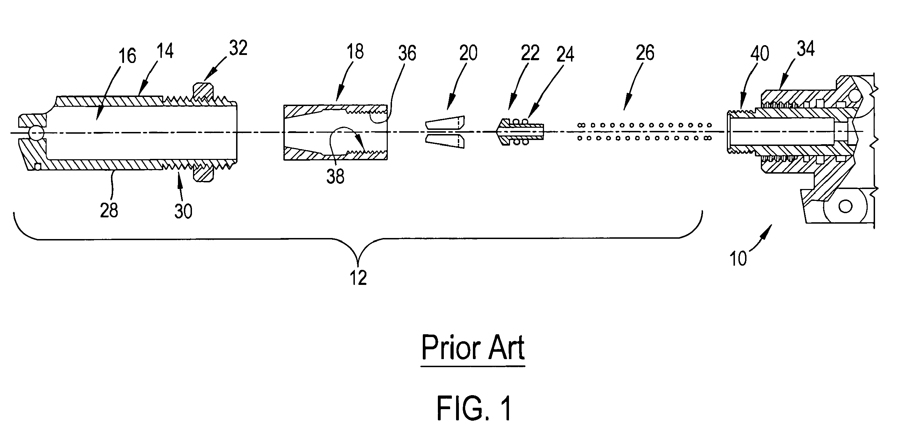

Figure 1 illustrates the front portion 10 of a typical pull tool and the components of a typical pull head 12. As shown, the pull head 12 includes a sleeve 14 which is generally cylindrical having a chamber 16 therein. Disposed in the chamber 16 are a collet 18, jaws 20, a jaw follower 22, a bumper 24 and a spring 26. An external surface 28 of the sleeve 14 includes threads 30 for receiving a lock nut 32 and threading into a head cylinder 34 at the front portion 10 of the pull tool, while an internal surface 36 of the collet 18 includes threads 38 for threading onto a head piston 40 at the front portion 10 of the pull tool. In use, the pull tool is actuated, causing the head piston 40 to move back relative to the head cylinder 34, causing the collet 18 to move back relative to the sleeve 14, and causing the jaws 20 to clamp onto and pull a mandrel or a fastener. This structure and use is conventional and widely known in the industry.

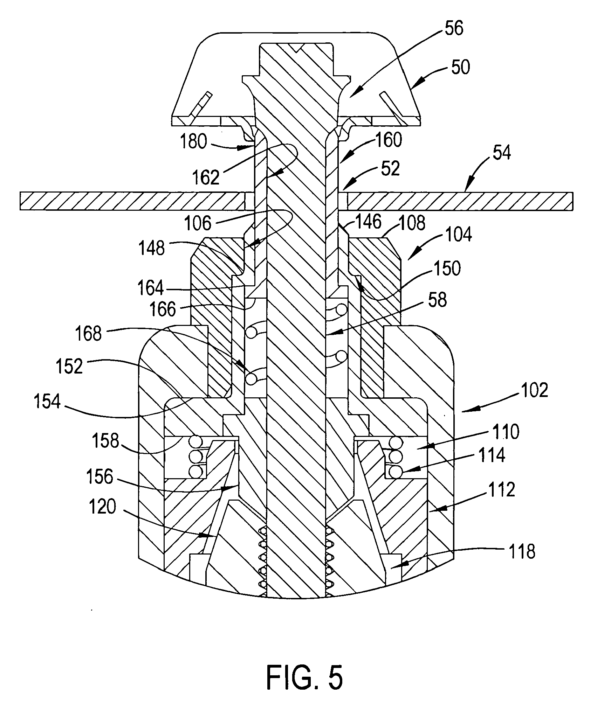

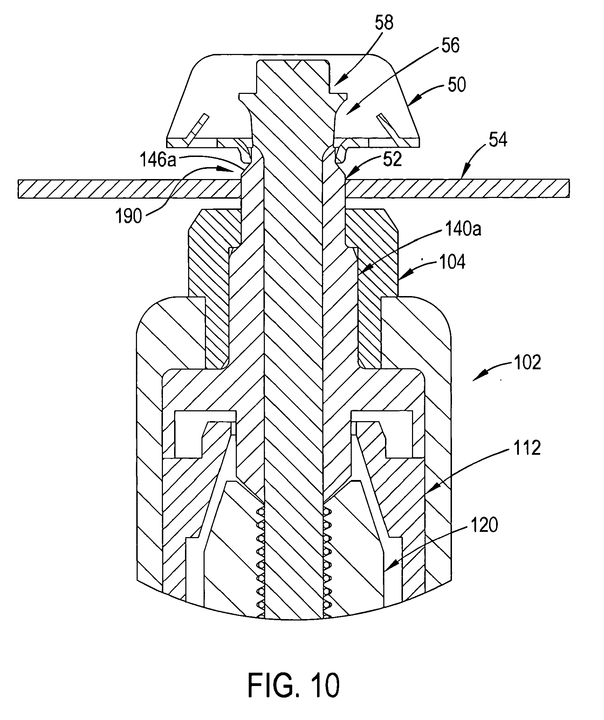

Rivetless nut plates are also standard in the industry and are typically used in association with fluid tanks, such as fuel tanks or water tanks, for aircraft or the like, for providing a floating, threaded receptacle for receiving a fastener. Some rivetless nut plates are designed such that pull type tools are used to perform the installation. For example, US 2003/0091408 (the publication of United States patent application Serial No. 10/272,721, filed October 17, 2002) discloses a rivetless nut plate where a retainer or attachment sleeve (identified with reference numeral 50 in the Figures of the present application) is positioned in an aperture (identified with reference numeral 52 in the Figures of the present application) in a workpiece (identified with reference numeral 54 in the Figures of the present application), and an enlarged head portion (identified with reference numeral 56 in the Figures of the present application) of a stem (identified with reference numeral 58 in the Figures of the present application) is disposed in the attachment sleeve. Subsequently, a pull tool (such as one which has a front portion 10 such as is shown in Figure 1) is used to pull on the stem, causing the head portion of the stem to be pulled through a tubular portion of the attachment sleeve, causing the tubular portion to expand and engage side walls of the aperture in the workpiece (as shown in the progression of Figures 5 through 7, and as shown in the progression of Figures 10 through 12).

Typically, those rivetless nut plates which are installed using a pull tool are installed using a pull head 12 such as shown in Figure 1 which includes a flat surface which can be held flush against the workpiece 54 during installation. The flat surface helps ensure that installation occurs perpendicular to the surface of the workpiece 54. While the flat surface of the tool is held against the workpiece, the pull head 12 is inserted into the hole 52 in the workpiece 54 in order to aid in alignment. As such, a proper installation is dependent on the operator's ability to ensure that the pull head 12 is properly positioned inside the hole 52. What often occurs is that the pull tool is pressed against the workpiece and the pull head 12 is pressed against one side of the hole 54 (rather than being centered in the hole). As such, installation occurs off center to the hole. Current, widely available pull head designs do not include any means of aligning a rivetless nut plate with regard to a hole, nor include any means for gauging the quality of a drilled hole. Even if the operator takes the time to properly align the pull tool, there remains uncertainty with regard to alignment of the rivetless nut plate with the drilled hole, as well as uncertainty with regard to the quality of the drilled hole.

Installation of rivetless nut plates requires that the aperture in the workpiece be precise. The difficulty of drilling a hole (i.e., aperture) perpendicular to the surface of a workpiece combined with the difficulty of inserting, aligning and installing the rivetless nut plate relative to the hole often adversely affects the quality of the installation. It is especially difficult to drill a precise hole and thereafter properly align a rivetless nut plate in the hole in situations where thin workpieces are involved, in situations where access is limited (i.e., in tight work spaces), in situations where the aperture in the workpiece is oblong, and in situations where some of the structure surrounding the aperture has been torn out during installation. Generally speaking, when a fastener, such as a rivetless nut plate, is poorly installed, the mechanical properties of the fastener are adversely affected. Therefore, it is important to properly align a fastener, such as a rivetless nut plate, for installation in an aperture.

### Objects and Summary

An object of an embodiment of the present invention is to provide a self-aligning tool for installing pull type fasteners, such as rivetless nut plates.

Another object of an embodiment of the present invention is to provide a tool which can be used to efficiently align and install pull type fasteners, such as rivetless nut plates, with minimal operator involvement.

Briefly, and in accordance with at least one of the foregoing objects, an embodiment of the present invention provides a pull head for installing pull type fasteners, such as rivetless nut plates, the pull head is engageable with an installation tool or pull tool and includes a sleeve, a nosepiece on the end of the sleeve, and an insert which extends from an opening in the nosepiece. The insert is configured to enter an aperture in a workpiece and center the pull head relative to the aperture. The insert is shiftable relative to the nosepiece, and preferably includes a taper at its end to facilitate entry into the aperture. The pull head includes jaws which are configured to grab and pull on a stem or fastener, and the insert is configured such that as the stem or fastener is pulled, a surface of the stem or fastener contacts the insert and the insert is pulled along with the stem or fastener. As such, the insert begins in the aperture, but is pulled out of the aperture as the stem or fastener is pulled to effect installation.

As an alternative, the pull tool may include a spring and a nose which are disposed in an insert, wherein the nose extends through an opening in the insert and is shiftable relative thereto, thereby compressing the spring. The nose is engageable with a rivetless nut plate for example, and the jaws are configured to grab and pull on a stem or fastener. The nose is configured to be pulled along with the stem or fastener, thereby compressing the spring. The insert is configured such that as the stem or fastener is pulled further, the nose becomes fully retracted relative to the insert, and the insert is thereafter pulled along with the stem or fastener and the nose.

### Brief Description of the Drawings

The organization and manner of the structure and operation of the invention, together with further objects and advantages thereof, may best be understood by reference to the following description, taken in connection with the accompanying drawings, wherein like reference numerals identify like elements in which:
Figure 1 is an exploded, cross-sectional view of a conventional pull head and a cross-sectional view of a front portion of a pull tool;
Figure 2 is a cross-sectional view of a pull head which is in accordance with an embodiment of the present invention;
Figure 3 is an exploded view of some of the components of the pull head shown in Figure 2;
Figure 4 is an exploded view of a spring insert assembly which is shown in Figure 3;
Figures 5-7 are sequence views which show the pull head of Figures 2 and 3 installing a rivetless nut plate;
Figure 8 is a cross-sectional view of a pull head which is in accordance with another embodiment of the present invention;
Figure 9 is an exploded view of some of the components of the pull head shown in Figure 8;
Figures 10-12 are sequence views which show the pull head of Figure 8 installing a rivetless nut plate;
Figure 13 is an exploded view of a sensing mechanism which can be used in association with a pull head, such as either one of the pull heads shown in Figures 2 or 8;
Figure 14 is a cross-sectional view of the sensing mechanism shown in Figure 13;
Figure 15 shows the sensing mechanism when an aperture is the correct size; and
Figure 16 shows the sensing mechanism when an aperture is too large.

### Description

While the present invention may be susceptible to embodiment in different forms, there are shown in the drawings, and herein will be described in detail, embodiments thereof with the understanding that the present description is to be considered an exemplification of the principles of the invention and is not intended to limit the invention to that as illustrated and described herein.

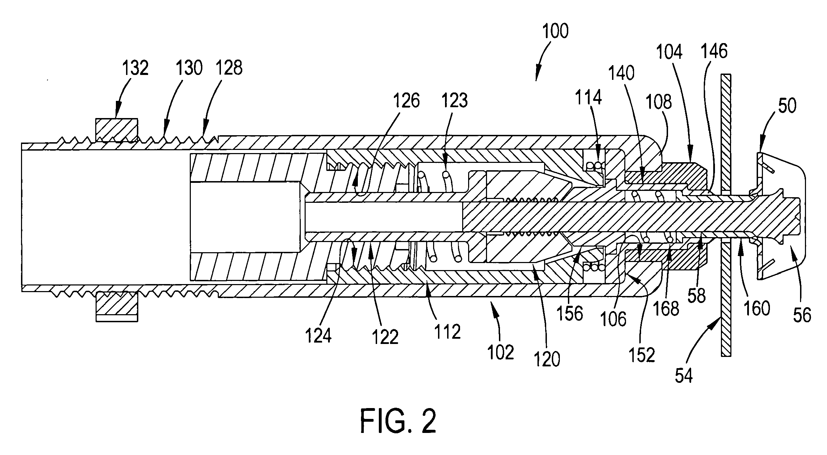

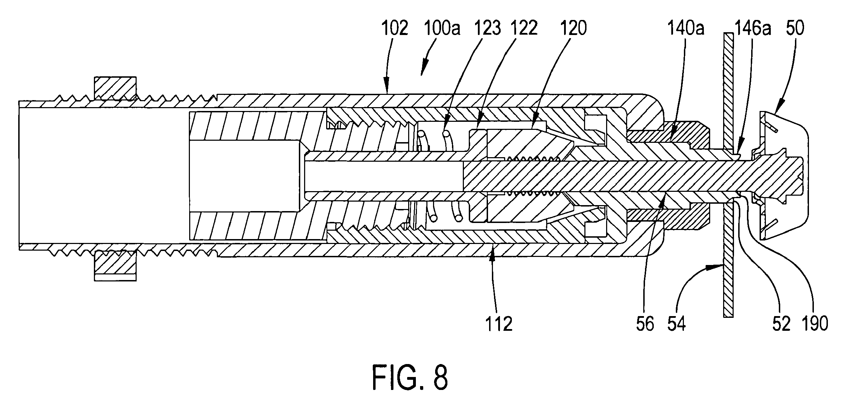

Figure 2 illustrates a pull head 100 which is in accordance with an embodiment of the present invention, while Figure 8 illustrates a pull head 100a which is in accordance with another embodiment of the present invention. Both pull heads 100, 100a are configured to be used with a pull tool to install a pull type fastener, such as a rivetless nut plate, and both are configured to align with an aperture in a workpiece with minimal operator involvement.

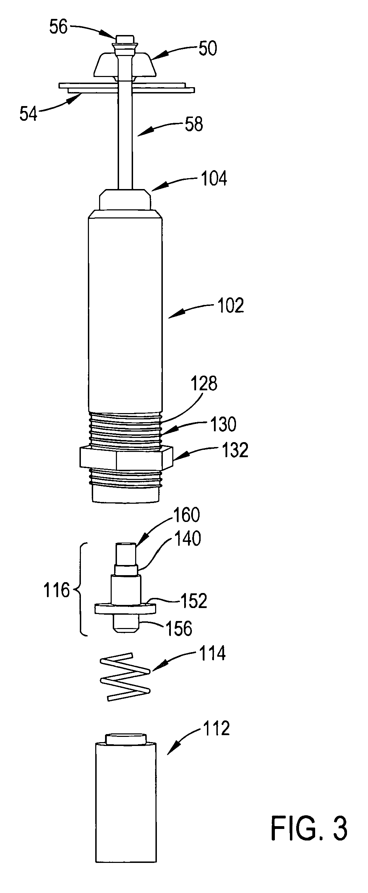

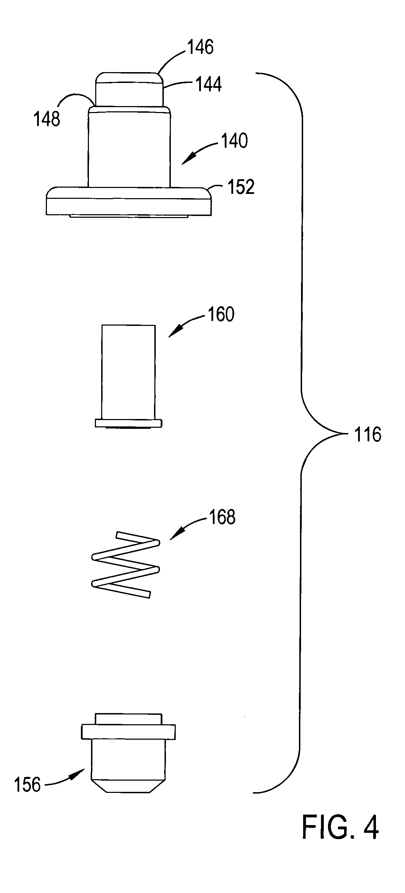

As shown in Figures 2-7, pull head 100 includes a sleeve 102 and a nosepiece 104 which is threadably engaged in a threaded bore 106 at the end 108 of the sleeve 102. The sleeve 102 is generally cylindrical and includes a chamber 110. Disposed in the chamber 110 of the sleeve 102 are a collet 112, a spring 114 and a spring insert assembly 116. The collet 112 is generally cylindrical and includes a throughbore 118. A set of clamping jaws 120, a jaw follower 122 and a spring 123 are disposed in the collet 112. An internal surface 124 of the collet 112 includes threads 126 for threading onto the head piston 40 of a pull tool (see Figure 1), and an external surface 128 of the sleeve 102 includes external threads 130 for threading into a head cylinder 34 of the pull tool (see Figure 1), wherein the pull tool is configured to drive the head piston 40 back and forth relative to the head cylinder 34. A nut 132 is provided on the threads 130 on the sleeve 102 for effectively securing the pull head 100 and pull tool together.

The spring insert assembly 116 includes an insert 140 which is generally cylindrical having a central throughbore 142. An end portion 144 of the insert 140 preferably includes a taper 146 which is configured to engage a hole 52 in a workpiece 54, as will be described more fully later herein. The insert 140 includes a shoulder 148 which is configured to engage an internal surface 150 of the nosepiece 104, as well as a base portion 152 which is configured to engage an internal surface 154 of the sleeve 102. As such, the insert 140 is generally retained in the nosepiece 104 and sleeve 102.

A cap 156 engages the insert 140 proximate an end 158 of the insert 140, preferably via either a threaded engagement or a press fit. A nose 160 is disposed in the insert 140 and is generally cylindrical having a central throughbore 162. The nose 160 includes a shoulder 164 which engages an internal shoulder 166 provided in the insert 140, such that the nose 160 is generally retained in the insert 140. A spring 168 is disposed in the insert 140, generally between the nose 160 and the cap 156.

To assemble the pull head 100, first the spring insert assembly 116 is assembled. To assemble the spring insert assembly 116, the nose 160 is inserted into insert 140, followed by the spring 168. Subsequently, the cap 156 is engaged with the insert 140, such as via a threaded engagement or a press fit. Once the spring insert assembly 116 is assembled, the spring insert assembly 116 is inserted nose 160 first into the sleeve 102. Then, the spring 114 is positioned behind the spring insert assembly 116, and the collet 112 is pressed against the spring 114. Assembly then continues as with other, conventional pull heads ― i.e., the jaws 120 and jaw follower 122 are inserted in the collet 112, and the collet 112 and sleeve 102 are engaged with a pull tool (see Figure 1).

Thereafter, in use, the pull tool is positioned over a hole 52 that has been prepared for fastener installation, and the nose 160 is extended through the hole 52 and the pull tool is pressed against the workpiece 54. As the pull tool is pressed against the workpiece 54, the hole 52 in the workpiece 54 encounters the taper 146 on the insert 140 and the hole 52 moves upwards along the taper 146. The taper 146 works to align the pull head 100 concentrically to the hole 52. Then, the mandrel 58 of an assembled rivetless nut plate, such as the rivetless nut plate disclosed in US 2003/0091408 (the publication of United States patent application Serial No. 10/272,721, filed October 17, 2002), which is hereby incorporated by reference in its entirety, is inserted into the extruding nose 160 (see Figure 5), and the sleeve 50 of the rivetless nut plate is pressed firmly against the nose 160. The firm press ensures that the rivetless nut plate fits over the end of nose 160. By fitting around the nose 160, the rivetless nut plate becomes concentric with the pull head 100 and the hole 52. Preferably, the throughbore 162 of the nose 160 and the end 180 of the nose 160 are provided as being consistent with the geometry of the mandrel 58 and the attachment sleeve 50, respectively, of the rivetless nut plate such that a good fit can be achieved between the nose 160 of the pull head 100 and the attachment sleeve 50 and mandrel 58 of the rivetless nut plate (i.e., the mandrel 58 fits well in the nose 160, and the attachment sleeve 50 of the rivetless nut plate fits well over the nose 160).

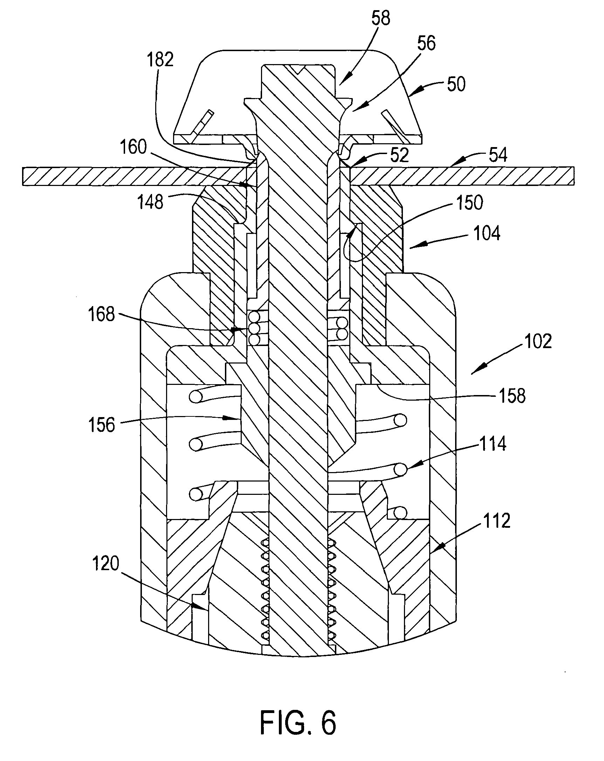

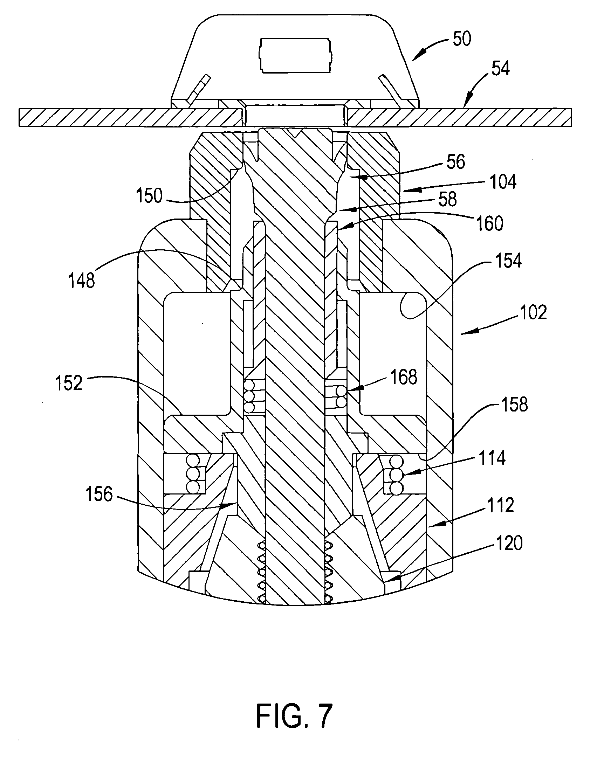

When the pull tool is actuated, the mandrel 58 is pulled. Specifically, the jaws 120 lock onto the mandrel 58 as the collet 112 is pulled back and the mandrel 58 is pulled back along with the collet 112. At first, the insert 140 does not move back. Instead, the insert 140 is held flush against the internal surface 150 of the sleeve 102 as a result of compression by the spring 114. The nose 160 retracts first against the spring 168 within the spring insert assembly 116. The inner geometry of the nose 160 interacts with the mandrel base 182 (see Figure 6) and serves to guide the rivetless nut plate through the center of the hole 52. The nose 160 retracts until the inner spring 168 is completely compressed. When the nose 160 is fully retracted, the retainer 50 of the rivetless nut plate will be at the surface of the hole 52 as shown in Figure 6. The collet 112 would have retracted far enough to allow the compressed spring 168 to relax and releases the insert 140. Installation thereafter continues as has been conventional. The mandrel 58 is pulled through the retainer 52, expanding the retainer into the workpiece 54 and completing the installation as shown in Figure 7. The result is a self-aligned installation that was not dependent on operator skill.

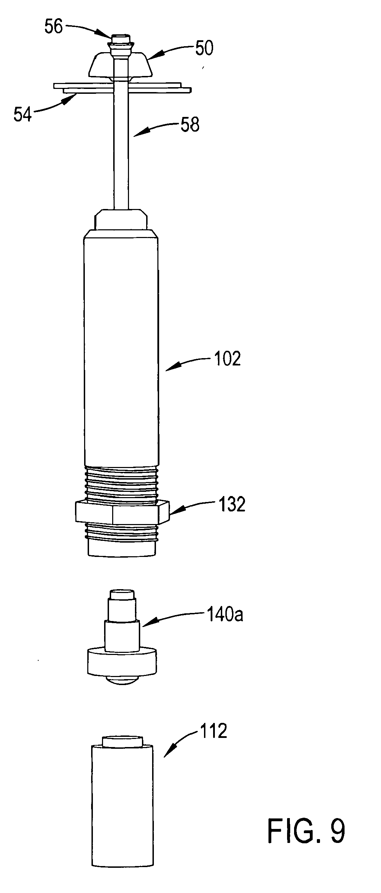

The pull head 100a shown in Figures 8-12 is very much like the pull head 100 previously described. Hence, like reference numerals are used to identify like parts. The pull head 100a provides that, instead of including a spring insert assembly 116 and a spring 114, the pull head 100a includes an insert 140a (without including springs 114, 168 and an end cap 156). While this embodiment lacks the spring action and lost motion which is provided by the previous embodiment, the insert 140a still provides a centering function with regard to a hole 52 in a workpiece 54. Preferably, like the insert 140 of pull head 100, the insert 140a of pull head 100a also includes a taper 146a.

To assemble the pull head 100a, the insert 140a and collet 112 are inserted into the sleeve 102. Assembly then continues as with other, conventional pull heads ― i.e., the jaws 120, jaw follower 122 and spring 123 are inserted in the collet 112, and the collet 112 and sleeve 102 are engaged with a pull tool.

Thereafter, in use, the pull tool is positioned over a hole that has been prepared for fastener installation, and the end 190 of the insert 140a is extended through the hole 52 (see Figure 10) and the pull tool is pressed against the workpiece 54. As the pull tool is pressed against the workpiece, the hole 52 in the workpiece 54 encounters the taper 146a on the insert 140a and the hole moves upwards along the taper 146a. The taper 146a works to align the pull head 100a concentrically to the hole 52. Then, the mandrel 56 of an assembled rivetless nut plate (or not a mandrel, but some other fastener) is inserted into the insert 140a, and the rivetless nut plate is pressed firmly against the end 190 of the insert 140a. The firm press ensures that the rivetless nut plate fits over the end 190 of the insert 140a. By fitting around the end 190 of the insert 140a, the rivetless nut plate becomes concentric with the pull head 100a and the hole 52. Preferably, the insert 140a is provided as being consistent with the geometry of the rivetless nut plate such that the mandrel 56 fits well in the insert 140a, and the attachment sleeve 50 of the rivetless nut plate fits well over the end 190 of the insert 140a.

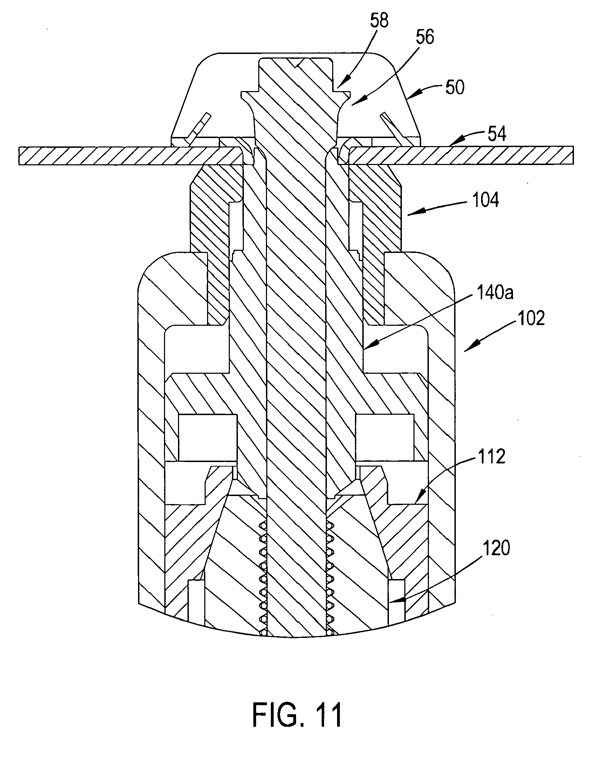

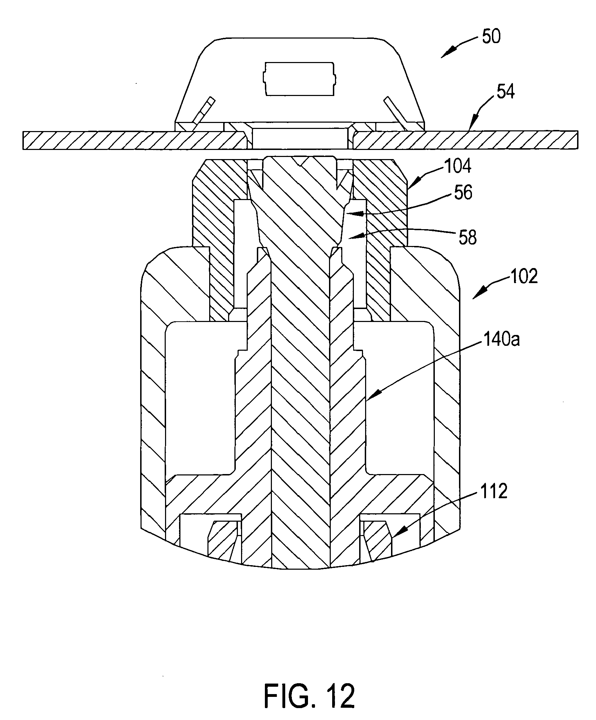

When the pull tool is actuated, the mandrel 56 is pulled. Specifically, the jaws 120 lock onto the mandrel 56 as the collet 112 is pulled back and the mandrel 56 is pulled back along with the collet 112. The mandrel 56 pulls the insert 140a back with it (see Figure 11). The inner geometry of the insert 140a interacts with the mandrel base and serves to guide the rivetless nut plate through the center of the hole 52. The mandrel 56 is pulled through the retainer 50, expanding lobes of the retainer into the workpiece 54 and completing installation as shown in Figure 12. The result is a self-aligned installation that was not dependent on operator skill.

Either pull head 100, 100a provides a novel solution to the industry's problem of installing rivetless nut plates into thin structures. The installation tools that are currently being used are using pull heads that result in too many unacceptable installations. The unacceptable installations are tearing into and biting the structure surrounding a hole during installation.

The pull heads described above and illustrated in Figures 2-12 provide that a pull tool will be able to align itself to the hole, align the fastener to the hole, and recognize and, if necessary, prohibit installation into poor quality drilled holes (i.e., undersized or oversized holes). First, the addition of an angled taper at the tip of the pull head concentrically guides the hole in the structure to the pull head during installation even if the pull tool is not held firmly against the structure during installation.

Second, preferably a portion of the nose or insert is configured to protrude through the hole prior to installation. This protrusion ensures that the rivetless nut plates, or other general pull type fasteners, are aligned to the center of the pull tool. The protrusions are circular cylinders with an inner curved geometry at the tip that is able to fit in between the rivetless nut plate attachment sleeve and the rivetless nut plate mandrel in order to keep the rivetless nut plate concentrically aligned to the installation tool during installation.

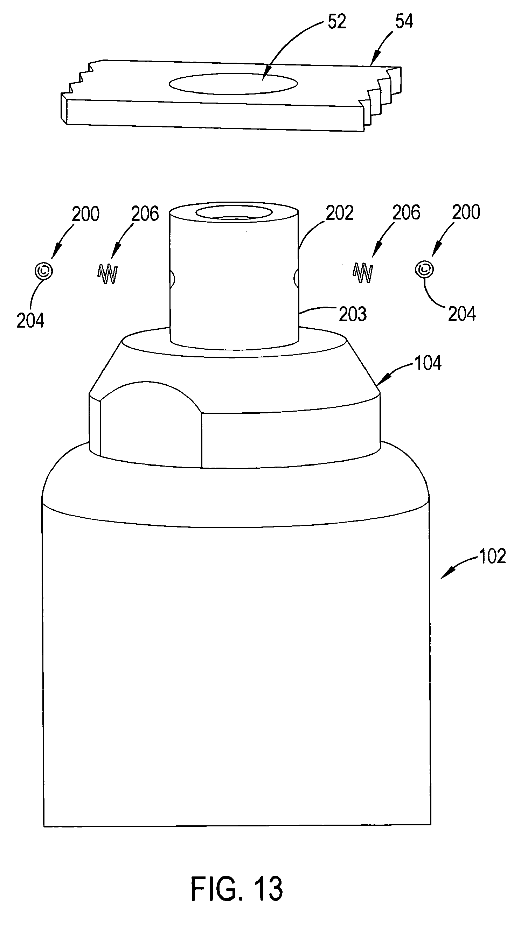

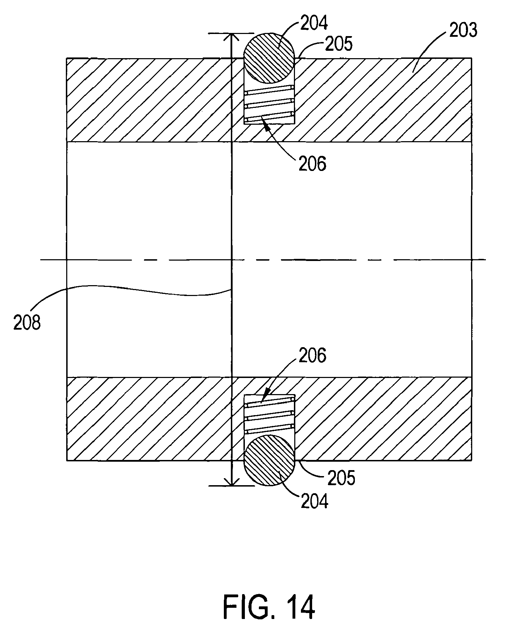

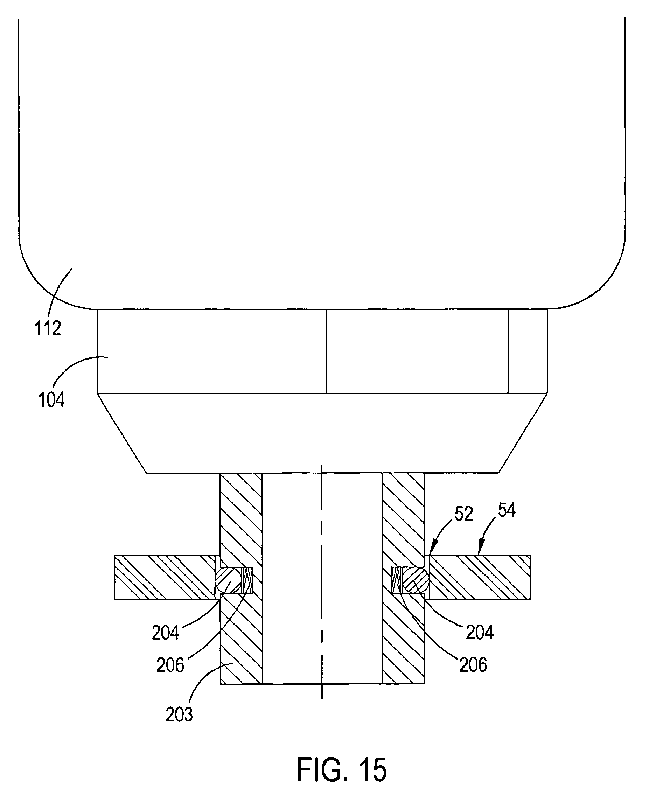

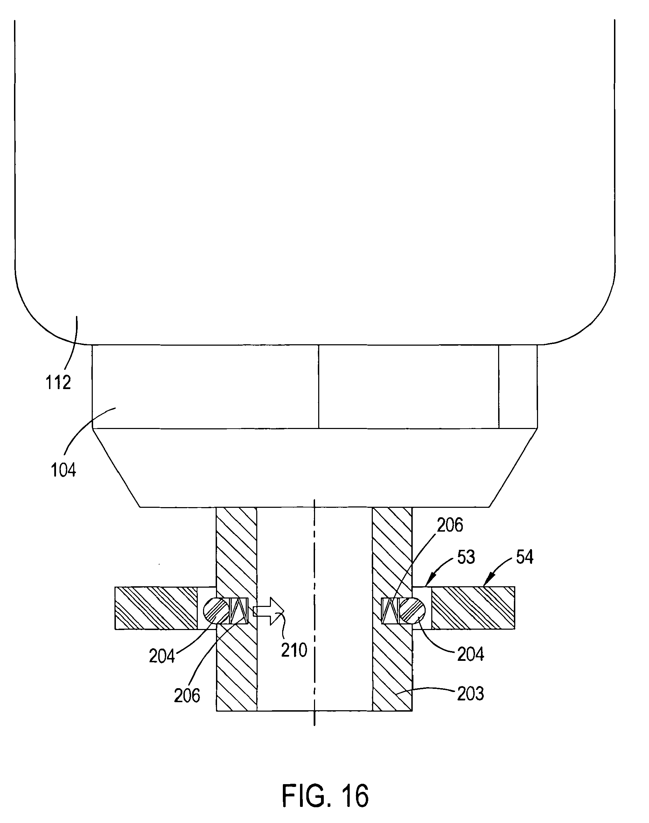

Third, the cylindrical protrusions can serve to verify that minimum or maximum hole size requirements are fulfilled prior to installation. If the hole size is too small, the cylindrical protrusion will not fit through the hole, prohibiting installation. The addition of a sensing element 200, as shown in Figures 13-16, on the outer diameter 202 of the cylindrical protrusion 203 (such as the nose 160 of pull head 100, or the insert 140a of pull head 100a) can serve to detect if the hole size is too large. The sensing element 200 may be composed of two or more tiny spherical balls 204 housed within the outer diameter of the cylindrical protrusion 203 at equal intervals. As shown in Figure 14, the spherical balls 204 are held above the surface 205 of the cylindrical protrusion 203 with relaxed springs 206 in order to form an outer diameter (i.e., dimension 208) that equals the maximum allowable hole size. When pressure is applied to the spherical balls 204 as shown in Figure 15, the springs 206 compress and the sensing element 200 activates. Thus, the sensing element 200 activates during installation so long as the hole 52 in the workpiece 54 is not oversized, as shown in Figure 16. If the sensing element 200 does not activate, preferably a warning signal (as represented by arrow 210) is sent to the operator, such as a bright red light or an installation lock that would prevent the release of the installation tool trigger.

While embodiments of the present invention are shown and described, it is envisioned that those skilled in the art may devise various modifications of the present invention without departing from the spirit and scope of the disclosure.

## Claims

1. A pull head (100, 100a) for installing fasteners, said pull head (100, 100a) **characterized by**: a sleeve (102) which is configured for engagement with an installation tool (10); a nosepiece (104) engaged in an end (108) of the sleeve (102); and an insert (140, 140a) which extends from an opening in the nosepiece (104), wherein the insert (140, 140a) is configured to enter an aperture (52) in a workpiece (54) and center the pull head (100, 100a) relative to the aperture (52).

2. A pull head (100, 100a) as recited in claim 1, **characterized in that** the insert (140, 140a) is shiftable relative to the nosepiece (104).

3. A pull head (100, 100a) as recited in claim 1, **characterized in that** the insert (140, 140a) includes a taper (146, 146a) at an end (144) to facilitate entry into the aperture (52).

4. A pull head (100, 100a) as recited in claim 1, further **characterized by** internal jaws (120) which are configured to grab and pull on a stem (58) or fastener.

5. A pull head (100, 100a) as recited in claim 4, **characterized in that** the insert (140, 140a) is configured such that as the stem (58) or fastener is pulled, a surface of the stem or fastener contacts the insert (140, 140a) and the insert (140, 140a) is pulled along with the stem (58) or fastener.

6. A pull head (100, 100a) as recited in claim 5, **characterized in that** the pull head (100, 100a) is configured such that the insert (140, 140a) begins in the aperture (52), but is pulled out of the aperture (52) as the stem (58) or fastener is pulled to effect installation.

7. A pull head (100) as recited in claim 1, further **characterized by** a spring (168) and a nose (160) which are disposed in the insert (140) , wherein the nose (160) extends through an opening in the insert (140) and is shiftable relative thereto, thereby compressing the spring (168).

8. A pull head (100) as recited in claim 7, **characterized in that** the nose (160) is engageable with a stem (58) or fastener, and the pull head (100) further comprises internal jaws (120) which are configured to grab and pull on the stem (58) or fastener.

9. A pull head (100) as recited in claim 8, **characterized in that** the nose (160) is configured to be pulled along with the stem (58) or fastener, thereby compressing the spring (168).

10. A pull head (100) as recited in claim 8, **characterized in that** the insert (140) is configured such that as the stem (58) or fastener is pulled further, the nose (160) becomes fully retracted relative to the insert (140), and the insert (140) is thereafter pulled along with the stem (58) or fastener and the nose (160).

11. A pull head (100, 100a) as recited in claim 1, further **characterized by** a sensing element (200) on an external surface (202) of the pull head (100, 100a), configured to detect whether the aperture (52) in the workpiece (54) is too large.

12. A pull head (100a) as recited in claim 11, **characterized in that** the sensing element (200) is disposed on an outer diameter (202) of a cylindrical protrusion (203) of the insert (140a) of the pull head (100a).

13. A pull head (100) as recited in claim 7, further **characterized by** a sensing element (200) on an external surface (202) of the pull head (100), configured to detect whether the aperture (52) in the workpiece (54) is too large, wherein the sensing element (200) is disposed on an outer diameter (202) of a cylindrical protrusion (203) of the nose (160) of the pull head (100).

14. A pull head (100, 100a) as recited in claim 11, **characterized in that** the sensing element (200) comprises a plurality of balls (204) housed within an external surface (205) of the pull head (100, 100a).

15. A pull head (100, 100a) as recited in claim 14, **characterized in that** the balls (204) are held above the external surface (205) of the pull head (100, 100a) via springs (206), thereby forming an outer diameter (208) that equals a maximum allowable hole size (52).

16. A pull head (100, 100a) as recited in claim 11, **characterized in that** the pull head (100, 100a) is configured to produce a warning signal associated with said sensing element (200).

17. A pull head (100) as recited in claim 1, further **characterized by** a collet (112), a spring (114), and a spring insert assembly (116), wherein said collet (112), spring (114), and spring insert assembly (116) are disposed in the sleeve (102).

18. A pull head (100) as recited in claim 17, further **characterized by** a set of clamping jaws (120), a jaw follower (122), and a second spring (123), wherein the jaws (120), jaw follower (122) and second spring (123) are disposed in the collet (112).

19. A pull head (100) as recited in claim 18, **characterized in that** an internal surface (124) of the collet (112) includes threads (126) for threading onto a head piston (40) of the installation tool.

20. A pull head (100) as recited in claim 19, **characterized in that** an external surface (128) of the sleeve (102) includes external threads (130) for threading into a head cylinder (34) of the pull tool.
